# EUROPEAN PATENT SPECIFICATION

(11) **EP 3 063 053 B1**
(45) Date of publication and mention of the grant of the patent: **12.02.2020**
(21) Application number: 14790608.5
(22) Date of filing: 29.10.2014
(51) Int. Cl.: B62D 29/00

(54) **BAFFLE OR REINFORCEMENT ELEMENT FOR SEALING AND/OR REINFORCING A CAVITY AND METHOD FOR PRODUCING SUCH A BAFFLE OR REINFORCEMENT ELEMENT**
SPERRE ODER VERSTÄRKUNGSELEMENT ZUM ABDICHTEN UND/ODER VERSTÄRKEN EINES HOHLRAUMES UND VERFAHREN ZUR HERSTELLUNG EINER SOLCHEN SPERRE ODER EINES SOLCHEN VERSTÄRKUNGSELEMENTS
DÉFLECTEUR OU ÉLÉMENT DE RENFORCEMENT D'ÉTANCHÉITÉ ET/OU DE RENFORT D'UNE CAVITÉ ET PROCÉDÉ DE FABRICATION D'UN TEL DÉFLECTEUR OU ÉLÉMENT DE RENFORCEMENT

(30) Priority: 31.10.2013 EP 13191175
(43) Date of publication of application: 07.09.2016
(73) Proprietor: Sika Technology AG, 6340 Baar (CH)
(72) Inventor: BELPAIRE, Vincent, B-1180 Uccle (BE); LINDGREN, Henrik, B-7181 Feluy (BE)
(74) Representative: Sika Patent Attorneys
(86) International application number: PCT/EP2014/073216
(87) International publication number: WO 2015/063151

(56) References cited:
- WO-A1-01/83206
- WO-A1-2008/080415
- WO-A1-2013/142145

## Description

### Technical field

The present invention relates to a baffle or reinforcement element for sealing and/or reinforcing a cavity, in particular a cavity of an automotive vehicle according to claim 1 and a method for producing a baffle or reinforcement element according to claim 12 as well as a system comprising a baffle or reinforcement element and a cavity according to claim 15.

### Technical Background

Document WO 2008/080415 A1 describes a carrier surrounded by a peripheral heat expandable sealing material. Pins are integrally molded with the carrier. The heat expandable sealing material is attached to the carrier at an outer flange as a continuous bead with the fastening pins protruding through the heat expandable material. Specifically, the fastening pins of the carrier protrude through corresponding boreholes of a rigid support plate. The carrier is "riveted" via the fastening pins to the rigid carrier plate by heating the protruding end points of the pins thus forming a rivet-like head. Such solution appears to be complicated. Moreover, it may be expected that such structure needs specific tooling in order to connect the components together.

Document WO 2013/142145 A1 shows a solution which is similar to document WO 2008/080415 A1. Pins are used to engage a carrier and a resinous material layer located thereon.

WO 01/83206 A1 discloses an assembly comprising a carrier including an interior area and an attachment member. A marginal rim is provided with a plurality of circumferentially intermittently spaced tabs extended from a base wall which substantially surrounds the interior area. An expansible material is configured as a band which is continuous and serpentined around the base wall and woven around and between the tabs. All in all, also the method of this document appears to be complicated. Moreover, the proposed structure does not appear to be very reliable.

Document EP 1 362 683 A2 describes a baffle element (baffle precursor) comprising two cellular plates with a foamable material arranged therebetween. The plates are joined by integrally molded hinges. Stops are provided on the plates to provide a gap of predetermined thickness between the plates when they are superimposed. The foamable material is arranged within the gap. In an embodiment, an attachment means comprises a clip. A part of the clip is integral with one plate of the baffle and another part of the clip is integral with the other plate of the baffle. The two parts of the clip being such that when the plates are superimposed upon each other they engage with each other to hold the two plates in position. Moreover, the clip holds the baffle precursor within the corresponding hollow structure in place. The plates are provided with a series of holes. The foamable material fills the entire gap between the plates and penetrates through the holes of the plates, if heat is activated. All in all, the structure of document EP 1 362 683 A2 appears to be complex and requires an exact positioning whilst being manufactured. In particular, the known baffles require an expensive and specific tooling (e.g. injection tools) to manufacture each of the components that are necessary for a given application. The known methods also require complex and high capital investment manufacturing methods (e.g. two-shot injection molding) that is not available or economically profitable in all manufacturing plants (especially in emerging regions or low volume production series).

### Summary

It is an object of the present invention to propose a simple structure for a baffle or reinforcement element which is easy to assemble, in particular manually, so that high production costs (high specific tooling investment costs and complex manufacturing methods) can be avoided. In particular, a competitive solution shall be provided being adapted for low labour cost countries and/or vehicles with comparatively low quantities being produced (e.g. less than 20000 vehicles per year).

According to the invention, a baffle or reinforcement element for sealing and/or reinforcing a cavity, in particular a cavity of an (automotive) vehicle comprises a carrier element, an expandable element, in particular foam element, supported by the carrier element, and a connection means including a plurality of bendable tabs provided on the carrier (for connecting carrier element and expandable element).

A core aspect of the invention lies in the plurality of bendable tabs as part of a connection between cover element and expandable element. Thereby, the expandable element can easily be connected so that the whole structure (including the expandable element) can be assembled without expensive machinery or the like. In particular, it is possible to assemble the baffle or reinforcement element manually with low costs. An idea behind the invention is the use of standardised and simple expandable components that require comparatively low tool investment costs. For example, an extrusion dye to produce standard expandable stripes can be used in multiple applications.

According to the invention, the tabs are bendable, in particular such that the tabs of the carrier can be bent and pressed against the cover elements in order to securely attach carrier and cover elements. Further preferably, carrier and cover elements are separated parts. Carrier and/or cover elements can be made of sheets, in particular metal or plastic sheets, wherein the tabs may be integral parts of the sheet. The sheets may have a constant thickness (or a varying thickness). The cover element may cover at least 50 % or at least 70 % of a surface (=first surface or upper surface) of the expandable element, facing the cover element. The carrier element may cover at least 50 % or at least 70 % of a surface (=second surface or bottom surface) opposing the second surface and facing the carrier element. The terms "expandable element" and "expandable foam element" should be understood as parts being expandable under certain physical and/or chemical treatments, e.g. under application of heat. The term "expandable" describes a state of the respective element before an expansion step. As opposed thereto, the term "expanded" describes a state after expansion (heat application and the like). The term "baffle or reinforcement element" preferably means an element which is suitable for providing a baffle and/or reinforcement within a cavity, in particular of an automotive vehicle if the expandable (foam) element of the baffle or reinforcement element is in an expanded state. If not explicitly stated otherwise, a "baffle or reinforcement element" comprises the expandable (foam) element in its unexpanded state. The term "expanded baffle or reinforcement element", however, describes an element where the (foam) element is expanded (= "expanded element" or "expanded foam element"). An "expandable element" keeps its expanded volume after the expansion treatment (e.g. heating treatment).

Preferably, the baffle or reinforcement element comprises a cover element covering the expandable element (in part or entirely). The tabs may connect the cover element with the carrier element and/or the expandable element. In such a case, a sandwich-structure comprising the carrier element, the cover element and the expandable element can be assembled under use of the tabs so that a complex machinery is not necessary.

In general, the expandable element can be (securely and safely) fastened to the cover and/or carrier element. In particular, a connection between expandable element and cover element and/or a connection between expandable element and carrier element is preferably provided by a form-fit connection (German: Formschluss). Alternatively or in addition, a force-fit (German: Kraftschluss) may provide a connection between expandable element and cover element and/or between expandable element and carrier element. In addition, a material bond (German: Stoffschluss), in particular adhesive bond may be provided.

Preferably, the connection means comprises a plurality of openings and/or through-holes, wherein the tabs penetrate the openings and/or through-holes. According to the invention, the tabs are provided on the carrier element. The tabs may be provided in the periphery of the carrier element (and/or the cover element). The at least one opening and/or through-hole may be provided on the cover element (and/or the carrier element). The plurality of openings and/or through-holes may be provided in the periphery of the cover element (and/or carrier element). The term "in the periphery" preferably means that the tabs and/or through-holes and/or openings are adjacent to an edge of the carrier and/or cover element. A distance between the tab and/or opening and/or through-hole, on the one hand, and the edge of the carrier and/or cover element, on the other hand, may be between 0 mm and 30 mm, preferably 0 mm and 20 mm. A distance between two adjacent tabs (and respective openings in the carrier and/or cover element) may be between 10 mm and 15 mm, preferably between 15 mm and 30 mm. Further preferably, a distance between all adjacent tabs (and corresponding openings) may be constant so that standard expandable stripes can be used as expandable elements. An opening might be a recess of the edge of the cover and/or carrier element. The openings and/or through-holes may have a rectangular shape. A length of the through-holes and/or openings may be 1.5 to 10 times, preferably 2 to 6 times, a width of the opening and/or through-hole. The tabs may have a rectangular shape. A length of the tabs may be 2 to 15, preferably 3 to 10 times the width thereof. In any case, a combination of tabs and openings and/or through-holes allows a simple assembly of the baffle or reinforcement element, wherein a stable construction can be achieved.

Preferably, the carrier element and the cover element define a profile forming a peripheral recess for receiving the expandable element. Alternatively or in addition the cover element has a bowl shape and/or the carrier element has a planar shape, in particular so that the cover element and carrier element define the peripheral recess. In general (optionally independent from the specific tabs), the carrier elements may have (in particular in its final, mounted state) a bowl shape (having a central depression approaching the carrier element). Thereby, a gap is provided in a periphery region of the carrier and cover element, wherein the gap is closed (or at least partly closed) in a central region. In essence, the carrier and cover element define a profile in which the expandable (foam) element may be arranged and which hinders the expandable (foam) element to expand in a central direction while expanding. The carrier element and the cover element defining a profile forming a peripheral recess for receiving the expandable element is disclosed and claimed as independent aspect of the invention (optionally without providing tabs). For example, the carrier element and the cover element may be connected in a central region thereof (e.g. by welding or riveting or other connecting methods).

Preferably, the carrier element is made of metal, in particular steel and/or aluminium. The cover element may be made of metal, in particular steel and/or aluminium and/or plastic, in particular nylon and/or PP (polypropylene) and/or HDPE (high density polyethylene) and/or LDPE (low density polyethylene). Carrier and/or cover elements may be made of metal and/or plastic sheets. The connection structures, such as the tabs, the openings and/or through-holes, may be provided by cutting out portions of the metal and/or plastic sheets (or alternatively by molding steps). In any case, the overall structure of the baffle or reinforcement element is stable and can easily be manufactured.

A thickness of the carrier element is preferably between 0.3 mm and 1.5 mm, preferably between 0.1 mm and 1.0 mm, in particular 0.4 mm and 0.7 mm. A thickness of the expandable (foam) element is preferably between 1 mm and 7 mm, in particular 2 mm and 5 mm. In any case, it is preferred that the thickness of the carrier element is higher than the thickness of the cover element. Thereby, a comparatively rigid carrier element is provided, whereas the cover element can be shaped (during manufacture). For example, a thickness of the carrier element may be at least 1.2 times (or at least 1.8 times) of the thickness of the cover element. Preferably, the thickness of the expandable (foam) element is higher than the thickness of the carrier and/or cover element. The term "thickness" means preferably an average thickness if the thickness varies.

Preferably, the expandable (foam) element is made by extrusion or injection molding.

The expandable (foam) element may expand to at least 50%, preferably 100%, further preferably at least 200%. An upper limit for the expansion may be 3000%, preferably 1000%, further preferably 300%. A preferred expansion value may be in the range of 1600% to 2000%. An expansion of 100% means that the expanded volume is twice the volume of the initial volume. An expansion of 200% means that the expanded volume is 3 times that of the unexpanded volume. An expansion of 50% means that the expanded volume is 1.5 times that of the unexpanded volume. In general, an expansion of X% means an additional volume of X% compared with the initial (unexpanded) volume. Preferably, a heat application is between 120 to 250°C, e.g. 200°C and is applied for a time of 1 to 60 minutes in particular 5 to 10 minutes, e.g. 5 minutes. If the expandable foam is a sealing foam, the expansion rate might be 100% to 3000%, in particular 500% to 2000%. If the expandable foam is a reinforcing foam, the expansion rate might be 50% to 300%, in particular 100% to 200%.

The expandable (foam) element may have (in its original state) a rectangular shape. In particular, the expandable (foam) element may have a strip-like shape (in its original state) so that it may be arranged along the periphery of the carrier element (e.g. via bending of the strip). Thereby, the baffle or reinforcement element can be assembled by the use of an expandable (foam) element which has a comparatively low amount of material (e.g. compared with an expandable element covering the entire surface of a carrier, for example as described in EP 1 362 683 A2). The use of a rectangular (strip-like) expandable (foam) element for a baffle or reinforcement element is herewith disclosed and claimed as independent aspect of the present invention. A length of the rectangular (strip-like) expandable (foam) element is preferably equal to an outer edge of the carrier element (+/- 1-20% or +/- 10% of the length of the outer edge, in particular +/- 1-5% or +/- 2% of the outer edge of the carrier element). A cross section of the expandable (foam) element may be 10 to 30 mm², in particular 15 to 25 mm². In an alternative embodiment, however the expandable element may be arranged in the centre of the carrier element. In such a case the length of the expandable element may be comparable with the length of a narrow portion of the carrier element. Hence, a comparatively low amount of baffle material is sufficient for providing a secure fixation of the baffle or reinforcement element within the cavity of an (automotive) vehicle. In its mounted state, the expandable (foam) element may have a frame-like-shape so that it is arranged on a periphery of the carrier element.

In a preferred embodiment, the expandable (foam) element comprises a plurality of openings and/or through-holes, in particular at least one (longitudinal) cut. Further preferably, the openings and/or through-holes (in particular cuts) correspond with the tabs of the carrier element (or cover element). Thereby, the tabs may penetrate the openings and/or through-holes (in particular longitudinal cuts) so that the expandable (foam) element is fixed on top of the carrier element. Conclusively, the tabs of the carrier element (or cover element) serve two functions, namely the fixation of the expandable (foam) element and the fixation of the cover element (or carrier element) which simplifies the structure of the baffle or reinforcement element.

The carrier element may comprise at least one bracket for fixation (within a cavity), in particular by welding. The bracket may be an integral part of the carrier element. The bracket may have a (substantially) rectangular shape and/or be vertically oriented with respect to the carrier element.

The tabs are preferably integral parts of the carrier element (and/or the cover element). This simplifies the production of the carrier (and/or cover) element. The tabs can secure all other components of the baffle or reinforcement element.

According to the invention, the tabs are bendable so that they can be bent on top of the cover element. In general, the tabs may be bent so that the expandable element is fixed on the carrier element.

The tabs may be bent on top of the cover element (preferably with a bending angle of more than 90°). In essence, the tabs may comprise a (substantially) vertical portion having a 90° angle with respect to the surface of a carrier element and a hinged portion having a bending angle of (preferably) more than 90° with respect to the (substantially) vertical portion. In general, the distal end portion of the tabs has an angle of more than 0 (preferably more than 10 or 20°) with respect to a surface of the carrier element (upper limits may be 60° or 40°) so that the respective tab portion points towards the carrier element. Thereby, the tab presses the cover element against the carrier element. Moreover, the tabs may shape the cover element so that a central portion of the cover element is closer to the carrier element than a bridging portion in the periphery of the cover element. In an alternative, the tabs may be separate parts, in particular plastic fixations to be connected with the carrier element and/or cover element. As a general aspect of the present invention said (plastic) fixations may be tabs or may have another structure.

In an embodiment, the expandable element is arranged on an edge of the carrier element. The tabs may have a rounded, in particular arrow-shaped end portion. Moreover, the tabs may have at least one undercut for fixation of the expandable element.

The tabs may have a rectangular cross-section. A thickness of the tabs may be less than 0.5, preferably less than 0,2, further preferably less than 0.1 of a width of the tabs. In general, the tabs comprise a thickness (material thickness), a width and a length. The length is the dimension from one end (which for example is fixed to the carrier element) to the other end of the tab (which for example is free). The width is the dimension perpendicular to the thickness and the length. The length of the tabs may be at least 1.0, preferably at least 2.0, preferably at least 4.0 of the width of the tabs. The tabs may be (at least partially) oriented in a direction which has an angle (of preferably at least 10°, further preferably at least 20°, even further preferably at least 30°, even further preferably 90°) to the radial direction with respect to the carrier element. For example, the tabs may be (at least partially) oriented perpendicular to a surface of the carrier element (which would correspond to an angle of 90° between the orientation of the corresponding tab and the radial direction).

The objective above is solved by an expanded baffle or reinforcement element produced by a baffle or reinforcement element, as described above, wherein the expandable (foam) element is expanded.

As a further independent aspect of the invention, a method for producing a baffle or reinforcement element (in particular, for producing a baffle or reinforcement element as described above) comprises the steps:
a) providing a carrier element;
b) arranging an expandable (foam) element on the carrier element;
c) connecting the carrier element and the expandable element via bendable tabs provided on the carrier element.

The expandable element may be covered by a cover element (in part or entirely). Additional fixation elements may be provided, preferably made of plastic.

Step a) preferably includes providing a (metal and/or plastic) sheet, cutting an outer shape of the sheet and/or forming cut-outs in a periphery of the sheet and bending portions within the cut-outs to form a plurality of tabs.

Step b) may comprise providing a (in particular rectangular) expandable (foam) element, providing openings within the expandable (foam) element, and arranging the tabs of the carrier element within the openings.

Preferably, the method comprises cutting an outer shape and/or forming of openings or through-holes within the cover element and arranging the tabs of the carrier element within the openings or through-holes of the carrier element. In addition or alternatively, step d) may comprise bending a distal portion of the tabs of the carrier element on top of the cover element, preferably so that the tabs press the cover element against the expandable foam (element) and/or the carrier element. Thereby, a stable construction may be achieved. The method preferably comprises a step of expanding (in particular via heating) the expandable (foam) element so that it expands. An expansion rate is preferably as identified above with respect to the baffle or reinforcement element.

According to an independent aspect of the present invention, a system comprises a baffle or reinforcement element as described above and/or produced by the method as described above and a cavity for receiving the baffle or reinforcement element. In an application, the baffle or reinforcement element is arranged within the cavity, wherein the expandable (foam) element is expanded so that the expandable (foam) element touches the walls of the cavity.

### Brief Description of the Drawings

In the following, a preferred embodiment of the present invention is described with reference to the drawings. These show:
- Fig. 1: an oblique view of a sheet for preparing a carrier element;
- Fig. 2: an oblique view of a sheet for preparing the carrier element;
- Fig. 3: an oblique view of the sheet of Fig. 2 together with an expandable foam element;
- Fig. 4: an oblique view of a baffle or reinforcement element;
- Fig. 5: an enlarged top view of portion E of Fig. 4;
- Fig. 6: a cross-section along line VI-VI in Fig. 5;
- Fig. 7: the cross-section of Fig. 6 with dotted line;
- Fig. 8: the cross-section of Fig. 6 with an expanded foam element and a wall;
- Fig. 9: a further embodiment of the baffle or reinforcement element in a non-final state;
- Fig. 10: an end portion of the baffle or reinforcement element of Fig. 9; and
- Fig. 11: the baffle or reinforcement element of Fig. 9 in a final state.

### Detailed Description of Embodiments

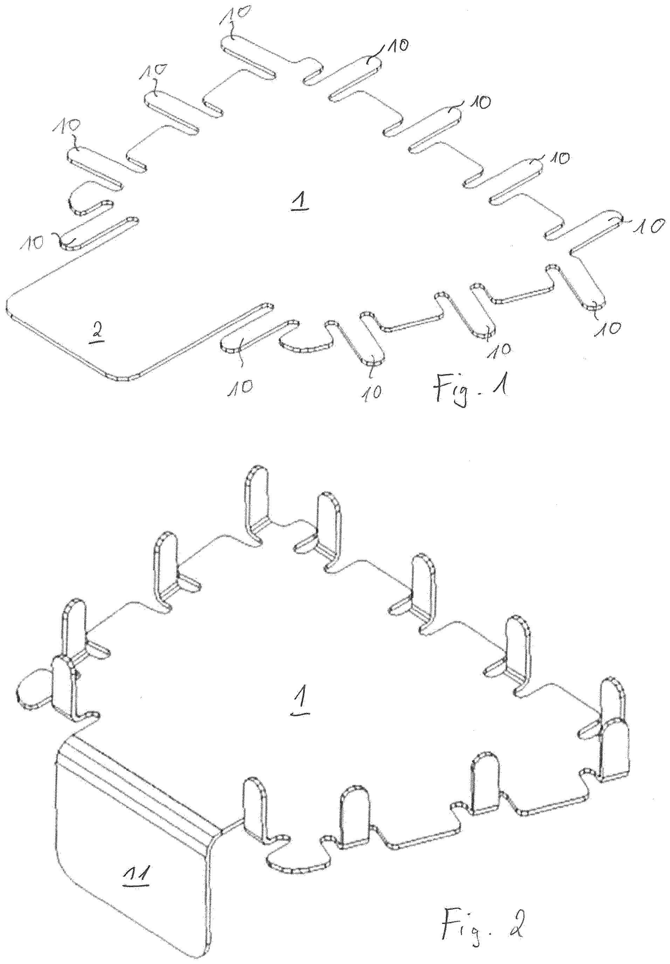

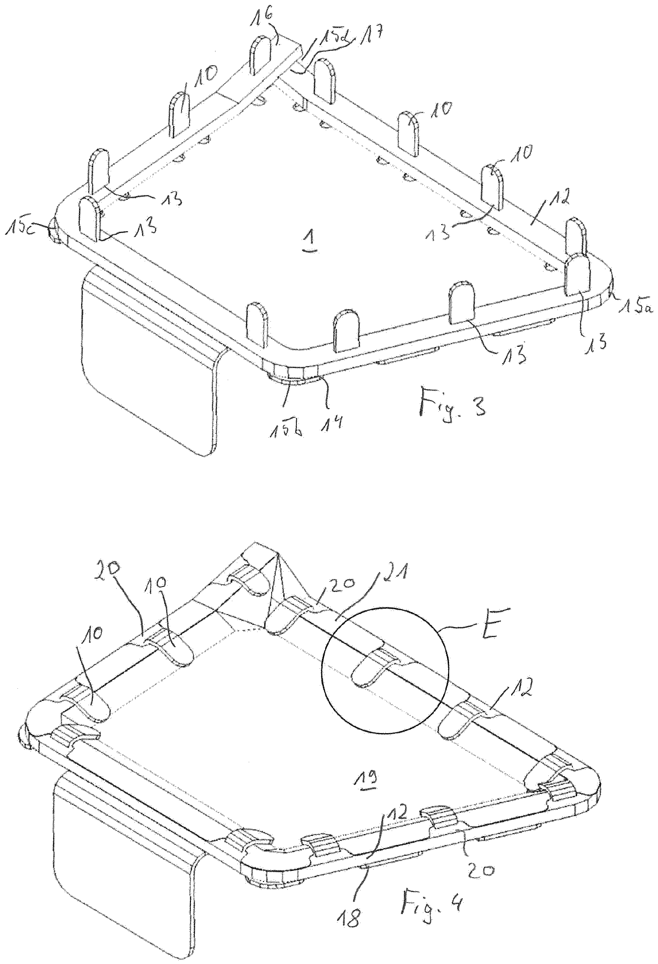

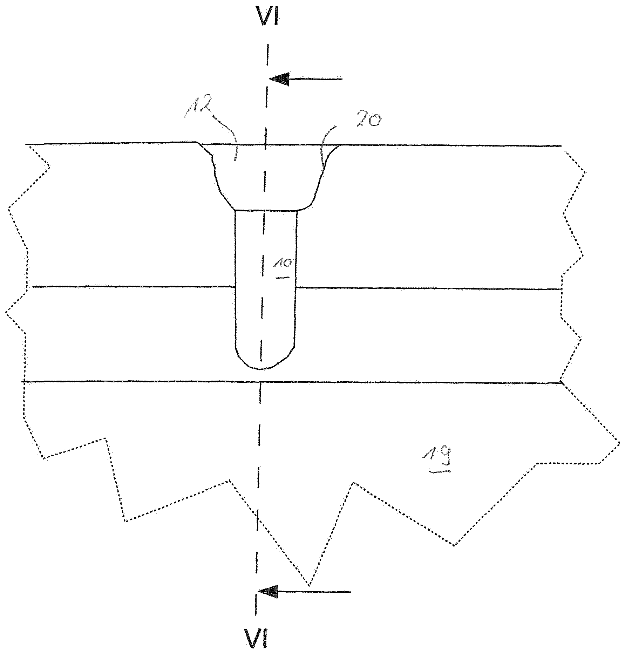

Fig. 1 shows a (metal) sheet 1 for forming a carrier element 18 as shown in Fig. 4, having a plurality of tabs 10 and a portion 2 for forming a welding bracket 11 (compare Fig. 2). The metal sheet 1 of Fig. 1 can be produced by stamping (or other forming and/or cutting methods) of a (metal) sheet. The tabs 10 of the metal sheet 1 of Fig. 1 are arranged in the periphery of the metal sheet 1 and point radially outwardly (in the plane of the metal sheet 1).

Fig. 2 shows the result of a subsequent production step. Portion 2 is bent so that the welding bracket 11 is obtained. The tabs 10 are bent so that they form an angle of (approximately) 90° with respect to the main plane of the metal sheet 1. Other angles of the welding bracket 11 and the tabs 10 with respect to the main plane of the metal sheet 1 are possible. In the embodiment of Fig. 2, the welding bracket 11, on the one hand, and the tabs 10, on the other hand, point in opposing directions.

According to Fig. 3, a (strip-like) expandable foam element 12 with through-holes 13 is arranged in a peripheral region 14 of the metal sheet 1. In its original state, the expandable foam element 12 is a rectangular (box-shaped) member. In the state as shown in Fig. 3, the expandable foam element 12 is bent in three of four corner regions 15a-15d of metal sheet 1. In the fourth corner region 15d, end portions 16, 17 of the expandable foam element 12 overlap. Alternatively, it is possible that the end portions 16, 17 are flush aligned.

As can be seen in Fig. 3, the tabs 10 penetrate the through-holes 13 of the expandable foam element 12 so that the expandable foam element 12 is securely fixed on top of the metal sheet 1.

Fig. 4 shows the final state of a baffle or reinforcement element. On top of metal sheet 1 being formed to a carrier element 18, and the expandable foam element 12, a cover element 19 is arranged. Cover element 19 may be a metal or plastic sheet. The tabs 10 of carrier element 18 are bent inwardly so that they securely connect and stabilise the sandwich comprising carrier element 18, cover element 19 and expandable foam element 12. Moreover, the tabs 10 define (at least in part) the shape of the cover element 19 which will be described below in more detail.

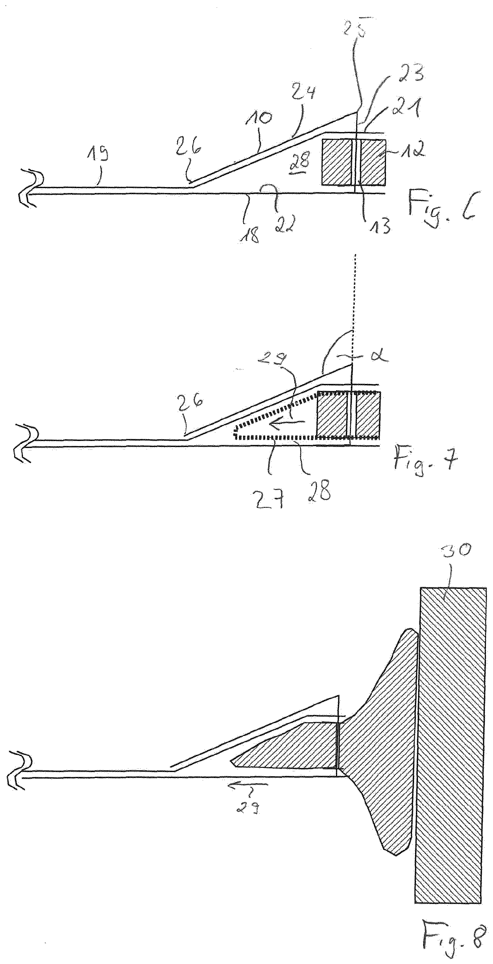

The cover element 19 comprises openings 20 which are formed as recesses of an edge region 21 of the cover element 19. The openings 20 are penetrated by tabs 10. Fig. 5 shows a top view of portion E of Fig. 4. Fig. 6 shows a cross section along line VI-VI in Fig. 5. As can be seen in Fig. 6, the tab portions 10 of the carrier element 18 are (at least in part) arranged on top of the cover element 19 and press the cover element 19 towards a bottom 22 of the carrier element 18. The edge region 21 of cover element 19 rests on the expandable foam element 12. Due to the support of the expandable foam element 12 and the force of the tab 10, the cover element 19 has the shape as shown in Fig. 6. In its original state, the cover element 19 is preferably a (planar; metal or plastic) sheet. It is possible that cover element 19 is pre-shaped.

The tab 10 comprises an upright portion 23 and a bent portion 24. A transition area 25 between bent portion 24 and upright portion 23 may be rounded (as shown in Fig. 4). A bending angle α (compare Fig. 7) between bent portion 24 and upright portion 23 is more than 90° so that a distal end 26 of tab 10 points towards the bottom 22 of carrier element 18.

Bottom 22 of carrier element 18 and the edge region 21 of cover element 19 define a profile 27 which is highlighted in Fig. 7 by a dotted line. Profile 27 defines a peripheral recess 28 in which the expandable foam element 12 is arranged. The profile 27 has (approximately) a C-shape. Because of profile 27 forming peripheral recess 28, an expansion of the material of the expandable foam element 12 is limited in a central direction 29 (compare Figs. 7 and 8). Therefore, the material of the expandable foam element is forced outwardly, if expanded (compare Fig. 8) in the direction of a wall 30 of a cavity to be sealed or reinforced. Only a minor amount of material can move in the central direction 29. Therefore, the material of the expandable element 12 is efficiently used so that a comparatively low amount of material is sufficient. Fig. 8 shows the structure of Figs. 6 and 7 in an expanded state meaning that the expandable foam element 12 is expanded (via a heating treatment).

Carrier element 18 and/or cover element 19 may be produced by stamping.

To sum up, the baffle or reinforcement element as shown in Fig. 4 can be produced as follows. The expandable foam element 12 is assembled around the tabs 10 of the carrier element 18. The cover element 19 is arranged on top of the expandable foam element 12 around the tabs 10 of the carrier element 18. The tabs 10 of the carrier 18 are folded to secure all components.

In order to seal or reinforce a cavity, the baffle or reinforcement element is arranged within the cavity and the welding bracket 11 is welded with a wall of the cavity. Thereafter, the expandable foam element is expanded via heat activation (e.g. in a baking process, for example an e-coat process or in a paint oven).

Compared to a standard two-component baffle (plastic/foam) the costs of the baffle or reinforcement element are comparatively low. Moreover, the (integrated) metal bracket allows a simplified fixation via welding. Compared to a standard full layer two-component (metal/foam) baffle, the structure of profile 27 and peripheral recess 28 allows an improved foam support and a directional expansion. Thereby, less material is necessary which reduces the costs. Moreover, a foam contamination of trim holes can be avoided (or reduced).

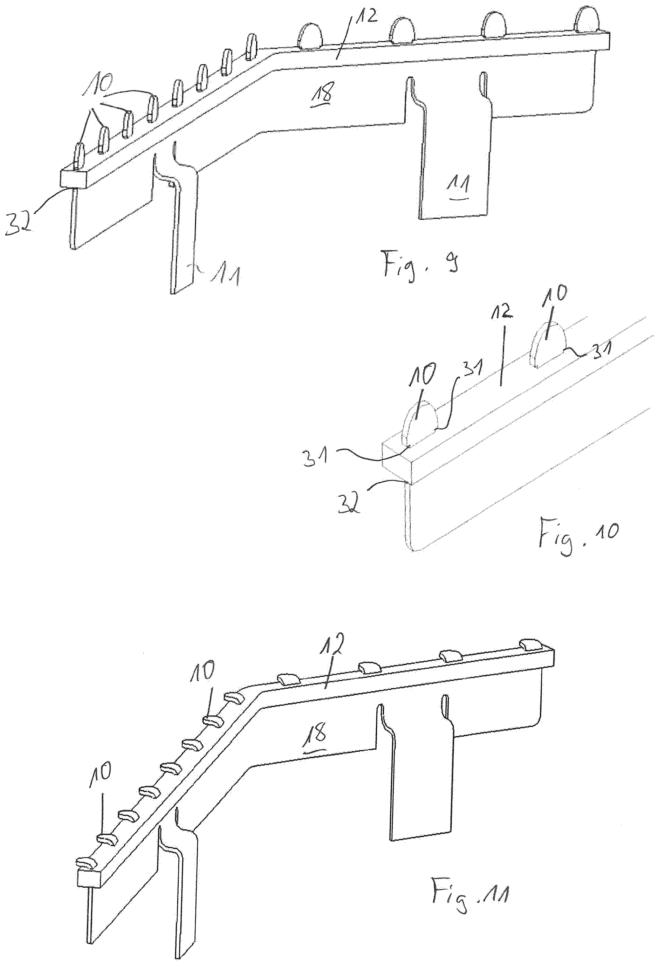

Fig. 9 shows a further embodiment of a baffle or reinforcement element in a non-final state. The baffle or reinforcement element of Fig. 9 comprises a carrier element 18 and an expandable element 12. The carrier element 18 comprises tabs 10 and two welding brackets 11. Fig. 10 shows an end portion of the baffle or reinforcement element of Fig. 9. As can be seen, the tabs 10 have an arrow-shaped end portion and undercuts 31 so that the expandable element 12 is arrested on an edge 32 of the carrier element. As shown in Fig. 11, in a final state of the baffle or reinforcement element of Fig. 9, the tabs 10 are bent so that the expandable element is fixed on the carrier element 18 (connected with the carrier element 18). In the embodiment of Figs. 9 to 11, a cover element is not necessary (however it is possible to use a cover element). The embodiment of Figs. 9 to 11 is especially useful if the width of the baffle or reinforcement element may be reduced (locally or on the full length) e.g. 25 mm to 20 mm. In such a case, a cover element may not be necessary and the tabs can directly be bent on the expandable element.

### Reference signs:

- 1: Metal sheet
- 2: Portion
- 10: Tab
- 11: Welding bracket
- 12: Expandable (foam) element
- 13: Through-hole
- 14: Peripheral region
- 15: Corner region
- 16: End portion
- 17: End portion
- 18: Carrier element
- 19: Cover element
- 20: Opening
- 21: Edge region
- 22: Bottom
- 23: Upright portion
- 24: Bent portion
- 25: Transition area
- 26: Distal end
- 27: Profile
- 28: Peripheral recess
- 29: Central direction
- 30: Wall
- 31: Undercut
- 32: Edge

## Claims

1. A baffle or reinforcement element for sealing and/or reinforcing a cavity, in particular a cavity of a vehicle, comprising:
- a carrier element (18),
- an expandable element (12), in particular expandable foam element, supported by the carrier element (18), and
- connection means including a plurality of bendable tabs (10) provided on the carrier element (18), for connecting the carrier element (18) and the expandable element (12).

2. The baffle or reinforcement element of claim 1, **characterised by** a cover element (19) covering the expandable element (12), at least in part, preferably wherein the tabs connect the cover element with the carrier element and/or the expandable element.

3. The baffle or reinforcement element of one of the preceding claims,
**characterised in that** the connection means comprises a plurality of openings and/or through-holes, wherein the tabs (10) penetrate the openings (20) and/or through-holes,
preferably wherein the tabs (10) are provided on the carrier element (18), in particular in a periphery thereof and/or
preferably wherein the plurality of openings (20) and/or through-holes is provided on the cover element (19), in particular in a periphery thereof
and/or
**characterised by** additional fixation elements, preferably made of plastic.

4. The baffle or reinforcement element of one of the preceding claims,
**characterised in that** the carrier element (18) and the cover element (19) define a profile (27) forming a peripheral recess for receiving the expandable element (12) and/or
**characterised in that**
the cover element has a bowl shape and/or the carrier element has a planar shape, in particular so that the cover element (19) and carrier element (18) define the peripheral recess (28).

5. The baffle or reinforcement element of one the preceding claims,
**characterised in that** the carrier element (18) is made of metal, in particular steel and/or aluminium, and/or
the cover element (19) is made of metal, in particular steel and/or aluminium, and/or plastic, in particular nylon and/or PP and/or HDPE and/or LDPE.

6. The baffle or reinforcement element of one of the preceding claims,
**characterised in that** the expandable element (12), in particular expandable foam element has an expansion rate of more than 50%, preferably more than 100%, further preferably more than 200% and/or
has an expansion rate of less than 3000%, preferably less than 1000%, further preferably less than 300%, particularly an expansion rate in the range of 1600% to 2000% and/or
wherein the material of the expandable element (12) is a sealing foam with an expansion rate of 100 to 3000%, preferably 500% to 2000%, or a reinforcing foam with an expansion rate of 50% to 300%, preferably 100% to 200%.

7. The baffle or reinforcement element of one of the preceding claims,
**characterised in that** the expandable element (12) has, in its original state, a rectangular shape and/or a cross-section of 10 to 30 mm³ and/or
**characterised in that**
the expandable element (12) has, in its mounted state, a frame-like shape, and/or is arranged on a periphery of the carrier element (18) and/or
**characterised in that**
the expandable element (12) comprises a plurality of, in particular regularly spaced, openings and/or through-holes (13),
preferably a plurality of, in particular longitudinal, cuts,
further preferably corresponding with the plurality of tabs (10).

8. The baffle or reinforcement element of one of the preceding claims,
**characterised in that** the carrier element (18) comprises at least one bracket (11) for fixation, in particular by welding.

9. The baffle or reinforcement element of one of the preceding claims
**characterised in that** the tabs (10) are integral parts of the carrier element (18) and/or
**characterised in that**
the tabs (10) are bent on top of the cover element (19), preferably with a bending angle of more than 90°.

10. The baffle or reinforcement element of one of the preceding claims
**characterised in that** the expandable element (12) is arranged on an edge (32) of the carrier element (18) and/or
**characterized in that** the tabs (12) have a rounded, in particular arrow-shaped, end portion and/or
**characterized in that** the tabs (12) have at least one undercut (31) for fixation of the expandable element.

11. An expanded baffle or reinforcement element produced by a baffle or reinforcement element of one of the preceding claims, wherein the expandable element, in particular expandable foam element, is expanded.

12. A method for producing a baffle or reinforcement element, in particular according to one of the preceding claims, comprising the steps:
a) providing a carrier element (18);
b) arranging an expandable element (12), in particular an expandable foam element, on the carrier element (18);
c) connecting the carrier element (18) and the expandable element (12) via bendable tabs (10); and
d) optionally, covering the expandable element (12) with a cover element (19), at least in part.

13. The method of claim 12, **characterised in that** step a) includes:
- providing a sheet;
- cutting an outer shape of the sheet and/or
- forming cut-outs in a periphery of the sheet;
- bending cut-out portions to form a plurality of tabs.

14. The method of one of the claims 12 or 13, **characterised in that** step b) comprises:
- providing a, in particular rectangular, expandable element;
- providing openings within the expandable element (12);
- arranging the tabs (10) of the carrier element (18) within the openings and/or
**characterised by**
- cutting an outer shape of the sheet and/or
- forming openings and/or through-holes within the cover element (19);
- arranging the tabs (10) of the carrier element (18) within the openings or through-holes and/or
**characterised in that**
step d) comprises bending a distal portion of the tabs (10) of the carrier element (18) on top of the cover element (19), preferably so that the tabs (10) press the cover element (19) against the expandable element (12) and/or the carrier element (18) and/or
**characterised by** expanding, in particular via heating, the expandable foam element so that it expands.

15. A system comprising a baffle or reinforcement element of one of the claims 1 to 11 and/or produced by the method of one of the claims 12 to 14 and a cavity for receiving the baffle or reinforcement element.

## Patentansprüche

1. Trennelement oder Verstärkungselement zum Abdichten und/oder Verstärken eines Hohlraums, insbesondere eines Hohlraums in einem Fahrzeug, umfassend:
- ein Trägerelement (18),
- ein expandierbares Element (12), insbesondere ein expandierbares Schaumelement, das von dem Trägerelement (18) getragen ist, und
- ein Verbindungsmittel, das eine Vielzahl von biegbaren Laschen (10), die auf dem Trägerelement (18) vorgesehen sind, umfasst, um das Trägerelement (18) und das expandierbare Element (12) zu verbinden.

2. Trennelement oder Verstärkungselement nach Anspruch 1, **gekennzeichnet durch** ein Abdeckelement (19), das das expandierbare Element (12) wenigstens zum Teil abdeckt, wobei vorzugsweise die Laschen das Abdeckelement mit dem Trägerelement und/oder dem expandierbaren Element verbinden.

3. Trennelement oder Verstärkungselement nach einem der vorhergehenden Ansprüche,
**dadurch gekennzeichnet, dass** das Verbindungsmittel eine Vielzahl von Öffnungen und/oder Durchgangsbohrungen umfasst, wobei die Laschen (10) die Öffnungen (20) und/oder Durchgangsbohrungen durchdringen,
wobei vorzugsweise die Laschen (10) auf dem Trägerelement (18), insbesondere in einem Umfang desselben, vorgesehen sind, und/oder
wobei vorzugsweise die Vielzahl von Öffnungen (20) und/oder Durchgangsbohrungen auf dem Abdeckelement (19), insbesondere in einem Umfang desselben, vorgesehen sind,
und/oder
**gekennzeichnet durch** zusätzliche Befestigungselemente, die vorzugsweise aus Kunststoff hergestellt sind.

4. Trennelement oder Verstärkungselement nach einem der vorhergehenden Ansprüche,
**dadurch gekennzeichnet, dass** das Trägerelement (18) und das Abdeckelement (19) ein Profil (27) definieren, das eine Umfangsausnehmung bildet, um das expandierbare Element (12) aufzunehmen, und/oder
**dadurch gekennzeichnet, dass**
das Abdeckelement eine Becherform aufweist und/ oder das Trägerelement eine planare Form aufweist, insbesondere so, dass das Abdeckelement (19) und das Trägerelement (18) die Umfangsausnehmung (28) definieren.

5. Trennelement oder Verstärkungselement nach einem der vorhergehenden Ansprüche,
**dadurch gekennzeichnet, dass** das Trägerelement aus (18) Metall, insbesondere Stahl und/oder Aluminium, hergestellt ist und/oder
das Abdeckelement (19) aus Metall, insbesondere Stahl und/oder Aluminium, und/oder aus Kunststoff, insbesondere Nylon und/oder PP und/oder HDPE und/oder LDPE, hergestellt ist.

6. Trennelement oder Verstärkungselement nach einem der vorhergehenden Ansprüche,
**dadurch gekennzeichnet, dass** das expandierbare Element (12), insbesondere das expandierbare Schaumelement, eine Expansionsrate von mehr als 50%, vorzugsweise mehr als 100%, noch bevorzugter mehr als 200%, aufweist und/oder
eine Expansionsrate von weniger als 3000%, vorzugsweise weniger als 1000%, noch bevorzugter weniger als 300%, insbesondere eine Expansionsrate im Bereich von 1600% bis 2000%, aufweist und/oder
wobei das Material des expandierbaren Elements (12) ein Dichtungsschaum mit einer Expansionsrate von 100% bis 3000%, vorzugsweise 500% bis 2000%, oder ein Verstärkungsschaum mit einer Expansionsrate von 50% bis 300%, vorzugsweise 100% bis 200%, ist.

7. Trennelement oder Verstärkungselement nach einem der vorhergehenden Ansprüche,
**dadurch gekennzeichnet, dass** das expandierbare Element (12) in seinem ursprünglichen Zustand eine rechteckige Form und/oder einen Querschnitt von 10 bis 30 mm³ aufweist und/oder
**dadurch gekennzeichnet, dass**
das expandierbare Element (12) in seinem montierten Zustand eine rahmenähnliche Form aufweist und/oder an einem Umfang des Trägerelements (18) angeordnet ist und/oder
**dadurch gekennzeichnet, dass**
das expandierbare Element (12) eine Vielzahl von Öffnungen und/ oder Durchgangsbohrungen (13), die insbesondere regelmäßig beabstandet sind, vorzugsweise eine Vielzahl von Einschnitten, die insbesondere längs verlaufen und noch bevorzugter der Vielzahl von Laschen (10) entsprechen, umfasst.

8. Trennelement oder Verstärkungselement nach einem der vorhergehenden Ansprüche,
**dadurch gekennzeichnet, dass** das Trägerelement (18) wenigstens einen Winkel (11) zur Befestigung, insbesondere durch Schweißen, umfasst.

9. Trennelement oder Verstärkungselement nach einem der vorhergehenden Ansprüche,
**dadurch gekennzeichnet, dass** die Laschen (10) Bestandteile des Trägerelements (18) sind, und/oder
**dadurch gekennzeichnet, dass**
die Laschen (10) oben auf dem Abdeckelement (19), vorzugsweise mit einem Biegewinkel von mehr als 90°, gebogen sind.

10. Trennelement oder Verstärkungselement nach einem der vorhergehenden Ansprüche,
**dadurch gekennzeichnet, dass** das expandierbare Element (12) an einem Rand (32) des Trägerelements (18) angeordnet ist, und/oder
**dadurch gekennzeichnet, dass** die Laschen (12) einen abgerundeten Endabschnitt, der insbesondere pfeilförmig ist, aufweisen, und/oder
**dadurch gekennzeichnet, dass** die Laschen (12) wenigstens einen Hinterschnitt (31) zur Befestigung des expandierbaren Elements aufweisen.

11. Expandiertes Trennelement oder Verstärkungselement, das durch ein Trennelement oder Verstärkungselement nach einem der vorhergehenden Ansprüche hergestellt ist, wobei das expandierbare Element, insbesondere das expandierbare Schaumelement, expandiert ist.

12. Verfahren zur Herstellung eines Trennelements oder Verstärkungselements, insbesondere nach einem der vorhergehenden Ansprüche, umfassend die folgenden Schritte:
a) Bereitstellen eines Trägerelements (18),
b) Anordnen eines expandierbaren Elements (12), insbesondere eines expandierbaren Schaumelements, auf dem Trägerelement (18),
c) Verbinden des Trägerelements (18) und des expandierbaren Elements (12) über biegbare Laschen (10) und
d) optional wenigstens zum Teil Abdecken des expandierbaren Elements (12) mit einem Abdeckelement (19) .

13. Verfahren nach Anspruch 12,
**dadurch gekennzeichnet, dass** Schritt a) Folgendes umfasst:
- Bereitstellen einer Platte,
- Schneiden einer äußeren Form der Platte und/ oder
- Ausbilden von Aussparungen in einem Umfang der Platte,
- Biegen von Aussparungsabschnitten, um eine Vielzahl von Laschen zu bilden.

14. Verfahren nach einem der Ansprüche 12 oder 13,
**dadurch gekennzeichnet, dass** Schritt b) Folgendes umfasst:
- Bereitstellen eines expandierbaren Elements, das insbesondere rechteckig ist,
- Bereitstellen von Öffnungen in dem expandierbaren Element (12),
- Anordnen der Laschen (10) des Trägerelements (18) in den Öffnungen und/oder
**gekennzeichnet durch**
- Schneiden einer äußeren Form der Platte und/ oder
- Ausbilden von Öffnungen und/oder Durchgangsbohrungen in dem Abdeckelement (19),
- Anordnen der Laschen (10) des Trägerelements (18) in den Öffnungen oder Durchgangsbohrungen und/oder
**dadurch gekennzeichnet, dass**
Schritt d) das Biegen eines entfernt gelegenen Abschnitts der Laschen (10) des Trägerelements (18) oben auf dem Abdeckelement (19) umfasst, vorzugsweise so, dass die Laschen (10) das Abdeckelement (19) gegen das expandierbare Element (12) und/oder das Trägerelement (18) drücken, und/oder
**gekennzeichnet durch** Expandieren des expandierbaren Schaumelements, insbesondere durch Erhitzen, so dass es expandiert.

15. System, umfassend ein Trennelement oder Verstärkungselement nach einem der Ansprüche 1 bis 11 und/oder hergestellt durch das Verfahren nach einem der Ansprüche 12 bis 14 und Hohlraum zum Aufnehmen des Trennelements oder Verstärkungselements.

## Revendications

1. Déflecteur ou élément de renforcement d'étanchéité et/ou de renfort d'une cavité, en particulier une cavité d'un véhicule, comprenant :
- un élément de support (18),
- un élément extensible (12), en particulier un élément en mousse extensible, supporté par l'élément de support (18), et
- des moyens de raccordement incluant une pluralité de languettes pliables (10) placées sur l'élément de support (18), destinés à raccorder l'élément de support (18) et l'élément extensible (12).

2. Déflecteur ou élément de renforcement selon la revendication 1, **caractérisé par** un élément de couverture (19) couvrant l'élément extensible (12) au moins en partie, de préférence lorsque les languettes raccordent l'élément de couverture à l'élément de support et/ou à l'élément extensible.

3. Déflecteur ou élément de renforcement selon l'une des revendications précédentes, **caractérisé en ce que** les moyens de raccordement comprennent une pluralité d'ouvertures et/ou de trous traversants, dans lequel les languettes (10) pénètrent dans les ouvertures (20) et/ou les trous traversants,
de préférence lorsque les languettes (10) sont placées sur l'élément de support (18), en particulier sur une périphérie de celui-ci, et/ou
de préférence lorsque la pluralité d'ouvertures (20) et/ou de trous traversants sont placé(e)s sur l'élément de couverture (19), en particulier sur une périphérie de celui-ci, et/ou
**caractérisé par** des éléments de fixation supplémentaires, de préférence constitués de plastique.

4. Déflecteur ou élément de renforcement selon l'une des revendications précédentes, **caractérisé en ce que** l'élément de support (18) et l'élément de couverture (19) définissent un profil (27) formant un évidement périphérique destiné à recevoir l'élément extensible (12) et/ou
**caractérisé en ce que** l'élément de couverture présente une forme de bol et/ou l'élément de support présente une forme plane, en particulier de sorte que l'élément de couverture (19) et l'élément de support (18) définissent l'évidement périphérique (28).

5. Déflecteur ou élément de renforcement selon l'une des revendications précédentes, **caractérisé en ce que** l'élément de support (18) est constitué de métal, en particulier d'acier et/ou d'aluminium, et/ou
l'élément de couverture (19) est constitué de métal, en particulier d'acier et/ou d'aluminium, et/ou de plastique, en particulier de nylon et/ou de PP et/ou de PEHD et/ou de PELD.

6. Déflecteur ou élément de renforcement selon l'une des revendications précédentes, **caractérisé en ce que** l'élément extensible (12), en particulier l'élément en mousse extensible, a un taux d'expansion supérieur à 50 %, de préférence supérieur à 100 %, plus préférablement supérieur à 200 % et/ou
a un taux d'expansion inférieur à 3000 %, de préférence inférieur à 1000 %, plus préférablement inférieur à 300 %, en particulier un taux d'expansion dans la plage comprise entre 1600 % et 2000 % et/ou
dans lequel le matériau de l'élément extensible (12) est une mousse d'étanchéité présentant un taux d'expansion compris entre 100 % et 3000 %, de préférence entre 500 % et 2000 %, ou une mousse de renforcement présentant un taux d'expansion compris entre 50 % et 300 %, de préférence entre 100 % et 200 %.

7. Déflecteur ou élément de renforcement selon l'une des revendications précédentes, **caractérisé en ce que** l'élément extensible (12) présente, dans son état d'origine, une forme rectangulaire et/ou une section transversale comprise entre 10 mm³ et 30 mm³ et/ou
**caractérisé en ce que** l'élément extensible (12) présente, à l'état monté, une forme de type cadre et/ou est disposé sur une périphérie de l'élément de support (18) et/ou
**caractérisé en ce que** l'élément extensible (12) comprend une pluralité d'ouvertures et/ou de trous traversants (13), en particulier régulièrement espacé(e)s, de préférence une pluralité de découpes, en particulier longitudinales, correspondant de préférence en outre à la pluralité de languettes (10).

8. Déflecteur ou élément de renforcement selon l'une des revendications précédentes, **caractérisé en ce que** l'élément de support (18) comprend au moins une applique (11) pour la fixation, en particulier par soudage.

9. Déflecteur ou élément de renforcement selon l'une des revendications précédentes, **caractérisé en ce que** les languettes (10) font partie intégrante de l'élément de support (18) et/ou
**caractérisé en ce que** les languettes (10) sont pliées au-dessus de l'élément de couverture (19), de préférence selon un angle de pliage supérieur à 90°.

10. Déflecteur ou élément de renforcement selon l'une des revendications précédentes, **caractérisé en ce que** l'élément extensible (12) est disposé sur un bord (32) de l'élément de support (18) et/ou
**caractérisé en ce que** les languettes (12) comportent une partie d'extrémité arrondie, en particulier en forme de flèche et/ou
**caractérisé en ce que** les languettes (12) comportent au moins un dégagement (31) pour la fixation de l'élément extensible.

11. Déflecteur ou élément de renforcement étendu produit par un déflecteur ou élément de renforcement selon l'une des revendications précédentes, dans lequel l'élément extensible, en particulier l'élément en mousse extensible, est étendu.

12. Procédé de production d'un déflecteur ou d'un élément de renforcement, en particulier selon l'une des revendications précédentes, comprenant les étapes suivantes :
a) fourniture d'un élément de support (18) ;
b) disposition d'un élément extensible (12), en particulier un élément en mousse extensible, sur l'élément de support (18) ;
c) raccordement de l'élément de support (18) et de l'élément extensible (12) par le biais de languettes pliables (10) ; et
d) facultativement, couverture de l'élément extensible (12) par un élément de couverture (19), au moins en partie.

13. Procédé selon la revendication 12, **caractérisé en ce que** l'étape a) inclut :
- la fourniture d'une feuille ;
- la découpe d'une forme extérieure dans la feuille et/ou
- la formation de découpes dans une périphérie de la feuille ;
- le pliage de parties découpées pour former une pluralité de languettes.

14. Procédé selon l'une des revendications 12 ou 13, **caractérisé en ce que** l'étape b) comprend :
- la fourniture d'un élément extensible, en particulier rectangulaire ;
- la fourniture d'ouvertures à l'intérieur de l'élément extensible (12) ;
- la disposition des languettes (10) de l'élément de support (18) à l'intérieur des ouvertures et/ou **caractérisé par**
- la découpe d'une forme extérieure dans la feuille et/ou
- la formation d'ouvertures et/ou de trous traversants à l'intérieur de l'élément de couverture (19) ;
- la disposition des languettes (10) de l'élément de support (18) à l'intérieur des ouvertures ou des trous traversants et/ou
**caractérisé en ce que**
l'étape d) comprend la flexion d'une partie distale des languettes (10) de l'élément de support (18) au-dessus de l'élément de couverture (19), de préférence de sorte que les languettes (10) appuient sur l'élément de couverture (19) contre l'élément extensible (12) et/ou l'élément de support (18) et/ou
**caractérisé par** l'expansion, en particulier par le biais d'un chauffage, de l'élément en mousse extensible afin qu'il s'étende.

15. Système comprenant un déflecteur ou un élément de renforcement selon l'une des revendications 1 à 11 et/ou produit par le procédé selon l'une des revendications 12 à 14 et une cavité destinée à recevoir le déflecteur ou l'élément de renforcement.
